# FASCICULE DE BREVET EUROPEEN

(11) **EP 1 622 720 B1**
(45) Date de publication et mention de la délivrance du brevet: **18.03.2015**
(21) Numéro de dépôt: 04742613.5
(22) Date de dépôt: 28.04.2004
(51) Int. Cl.: B01J 37/20, B01J 37/14, B01J 33/00, C10G 45/36, C10G 45/48

(54) **TRAITEMENT HORS SITE DE CATALYSEURS D'HYDROGENATION**
EX-SITU BEHANDLUNG EINES HYDRIERUNGSKATALYSATORS
OFF-SITE TREATMENT FOR HYDROGENATION CATALYSTS

(30) Priorité: 30.04.2003 FR 0305470
(43) Date de publication de la demande: 08.02.2006
(73) Titulaire: EURECAT S.A., 07800 La Voulte-sur-Rhône (FR)
(72) Inventeur: DUFRESNE, Pierre, F-26000 Valence (FR); LEBRUYERE, Franck, F-07800 Saint Georges Les Bains (FR); LOCATELLI, François, F-26000 Valence (FR)
(74) Mandataire: Schmitt, Nicolas A.J.
(86) Numéro de dépôt international: PCT/FR2004/001047
(87) Numéro de publication internationale: WO 2004/098774

(56) Documents cités:
- EP-A- 0 466 567
- EP-A- 0 707 890
- EP-A- 0 904 839
- HOFFER B W ET AL: "Characterization of ex Situ Presulfided Ni/Al2O3 Catalysts for Pyrolysis Gasoline Hydrogenation" JOURNAL OF CATALYSIS, ACADEMIC PRESS, DULUTH, MN, US, vol. 209, no. 1, 1 juillet 2002 (2002-07-01), pages 245-255, XP004468868 ISSN: 0021-9517

## Description

Dans le domaine du raffinage et de la pétrochimie, et notamment, à titre d'exemple, dans les réactions de reformage catalytique ou d'hydrogénations sélectives des essences, il convient parfois d'atténuer l'activité des catalyseurs pour une réaction particulière pour favoriser la promotion de la réaction recherchée. Ainsi on citera le cas des catalyseurs au nickel dans l'application d'hydrogénation sélective des dioléfines d'essence de pyrolyse ou dans l'application des hydrogénations d'hydrocarbures aromatiques. Ces catalyseurs sont réactifs à un point tel qu'ils peuvent provoquer des emballements lors des démarrages de catalyseurs neufs, ou régénérés, avec même des incidents de démarrage, voire la destruction du réacteur. Il est nécessaire donc de procéder à des traitements de passivation permettant d'éviter ces emballements (run away). Ces traitements consistent généralement à empoisonner irréversiblement par du soufre les sites actifs les plus virulents du nickel qui existent sur le catalyseur neuf ou régénéré.

Ainsi en ce qui concerne plus particulièrement le raffinage et les catalyseurs d'hydrogénation à base de nickel, de fer ou de cobalt, les catalyseurs adéquats sont commercialisés et chargés dans les réacteurs sous forme d'oxydes alors que leur forme activée et stable est la forme métallique. Dans l'art antérieur, on commence donc, dans une première étape, par réduire à l'hydrogène dans le réacteur ("in situ") les oxydes à l'état métallique puis pour parer aux inconvénients indiqués ci-dessus, dans une deuxième étape, on sélective l'activité du catalyseur, in situ, par introduction d'une quantité déterminée de soufre, généralement 0,1 à 1,2 % en poids de soufre par rapport au poids de catalyseur. Généralement on opère à l'aide d'un composé sulfuré tel que le sulfure de carbone, les mercaptans, l'hydrogène sulfuré, les composés thiophéniques, les sulfures et les disulfures, par exemple le diméthylsulfure DMS ou le diméthyldisulfure DMDS. Dans ces procédés de l'art antérieur, la réduction à l'hydrogène (première étape) est effectuée à température assez haute pendant assez longtemps (par exemple pour la réduction de l'oxyde de nickel en nickel métallique, on opère vers 400 °C pendant 10 à 15 heures).

Dans EP 466 568 B1 est décrit un procédé de sélectivation/pré-réduction de catalyseur comprenant une étape simultanée (a) d'imprégnation du catalyseur par un composé soufré et (b) de pré-réduction de ce catalyseur à l'aide d'un composé réducteur organique, donc en l'absence d'hydrogène frais.

Dans EP 0 707 890 A1 est décrit un procédé de prétraitement hors site d'un catalyseur de traitement d'hydrocarbures.

L'objet de l'invention permet d'améliorer les techniques de l'art antérieur et de travailler dans des conditions simplifiées et moins contraignantes pour l'opérateur de l'unité industrielle.

Selon l'invention décrite ci-après, on effectue trois étapes (a)(b)(c):
(a) l'imprégnation du catalyseur par au moins un composé ou agent soufré et (b) la réduction de ce catalyseur par de l'hydrogène à chaud (c'est à dire à une température supérieure à la température ambiante et de préférence supérieure à 250°C) et (c) soit une passivation oxydante, de ce catalyseur, soit une passivation par mise en contact de ce catalyseur avec un liquide organique inerte lourd, l'étape (c) est effectuée après les étapes (a) et (b), le liquide organique inerte lourd est choisi dans le groupe constitué par une huile blanche, un gasoil, un hexadécane.

Cette manipulation, conforme à la présente invention, est réalisée "ex situ" c'est-à-dire hors du réacteur ce qui permet à l'opérateur (c'est à dire au raffineur) de ne pas avoir à l'effectuer lui-même mais de la faire faire à l'extérieur par un spécialiste des traitements, des préconditionnements ou des régénérations de catalyseurs.

Ensuite, à l'issue d'un procédé de passivation d'un catalyseur, l'utilisateur du catalyseur, c'est-à-dire l'opérateur ou le raffineur, disposera le catalyseur ainsi prétraité dans son ou dans ses réacteurs et c'est ensuite dans ce ou ces réacteurs, c'est- à-dire "in situ" qu'il pourra procéder éventuellement à une dépassivation à l'hydrogène avec l'avantage de ne pas avoir alors à chauffer son catalyseur aux hautes températures et pendant les longues périodes qui sont exigées lorsque l'on n'effectue pas ledit pré-traitement. Ainsi, à titre d'exemple, un catalyseur au nickel réduit selon les techniques de l'art antérieur doit être traité en présence d'hydrogène à 400° C pendant 14 heures, ou encore 300° C et pendant 3 heures dans le cas d'une pré-réduction organique conventionnelle alors qu'à l'issue du procédé selon la présente invention, l'opérateur pourra, par exemple, se contenter de réactiver à l'hydrogène son catalyseur au nickel à 150° C et pendant 3 heures seulement.

Le procédé selon l'invention concerne un procédé de traitement "ex situ" d'un catalyseur ayant besoin d'être réduit avant emploi, ce catalyseur contenant au moins un métal du groupe VIII de la classification périodique des éléments et exempt de métaux du groupe VI, déposé sur un support, consistant à effectuer trois étapes (a) (b) (c)
(a) Une mise en contact du catalyseur avec au moins un composé ou agent soufré (étape dite de sélectivation).
(b) Un traitement de ce catalyseur par de l'hydrogène à une température supérieure à la température ambiante (étape dite de réduction).
(c) Une passivation de ce catalyseur réalisé par mise en contact avec un liquide organique inerte lourd ou par traitement oxydant réalisée après les étapes (a) et (b), le liquide organique inerte lourd est choisi dans le groupe constitué par une huile blanche, un gasoil, un hexadécane.

Selon l'invention, on traitera des catalyseurs à base d'au moins un métal du groupe VIII de la classification périodique des éléments, (ce métal étant de préférence le nickel et plus particulièrement sous forme d'oxyde de nickel) déposé sur un support approprié, notamment l'alumine, en particulier lorsque ce catalyseur a besoin d'être réduit avant emploi ou réemploi. Ces catalyseurs sont sensiblement exempts des métaux du groupe VI. Ces catalyseurs sont notamment utilisés dans les hydrogénations des hydrocarbures aromatiques et les hydrogénations des hydrocarbures oléfiniques. Les supports sur lesquels sont déposés le ou les métaux utilisés peuvent donc être des supports amorphes (alumine, etc.) ou cristallins (zéolithes, etc.). L'alumine est le support préféré.

L'invention concerne ainsi un procédé de traitement "ex situ" d'un catalyseur avant emploi ou réemploi de ce catalyseur, caractérisé en ce qu'il consiste à effectuer trois étapes (a), (b), (c) effectuées indifféremment dans un ordre (c) après (a) et (b) sur ce catalyseur, lequel contient au moins un métal du groupe VIII de la classification périodique des éléments, et étant sensiblement exempt d'un métal du groupe VI, (le catalyseur contenant de préférence du nickel, notamment sous forme d'un oxyde de nickel) déposé sur un support, ces trois étapes étant les suivantes :
(a) Une mise en contact du catalyseur avec au moins un composé ou agent soufré (étape dite de sélectivation). Dans cette étape, on peut opérer en présence d'au moins un solvant c'est à dire en solution aqueuse ou organique, ou en suspension dans la solution aqueuse ou organique.
(b) Un traitement de ce catalyseur par de l'hydrogène à une température supérieure à la température ambiante et de préférence à 250°C (étape dite de réduction).
(c) une passivation de ce catalyseur, soit de préférence oxydante, soit par une mise en contact avec un liquide organique lourd.

Le catalyseur est donc de préférence essentiellement constitué d'oxyde de nickel déposé sur une alumine. Les étapes (a) et (b) sont effectuées par exemple dans l'ordre (a) et (b) ou dans l'ordre (b) et (a). Elles peuvent également être effectuées simultanément. De préférence, au cours de l'étape (a) on opère par mélange de la masse catalytique et d'au moins un solvant et d'au moins un agent soufré ou sulfuré. Cet agent ou ce composé sulfuré ou soufré est choisi dans le groupe constitué par le diéthanoldisulfure (D.E.O.D.S.), le DMDS (diméthyl disulfure), les polysulfures et le soufre élémentaire.

Comme indiqué plus haut, notre procédé s'applique au traitement des catalyseurs d'hydrogénation des hydrocarbures aromatiques et des hydrocarbures oléfiniques. Ajoutons qu'au cours de l'étape (a), le taux de sulfuration du métal est compris entre 10 et 30%. Au cours de cette sulfuration, on incorpore dans le catalyseur de 0,05 à 10% et particulièrement de 0,2 à 2% de soufre exprimé en poids de soufre par rapport à la masse du catalyseur. Au cours de l'étape (b), le taux de réduction du catalyseur est de préférence d'au moins 40%.

Il a déjà été proposé dans l'art antérieur des méthodes de traitement d'un catalyseur comportant une sulfuration, une réduction et une passivation de catalyseur. On citera la demande de brevet européen de la demanderesse EP-A-707890 et la demande de brevet européen EP-A-904839. Mais la demande EP-A-707890 concerne essentiellement un traitement de catalyseurs d'hydrotraitement de coupes pétrolières, le catalyseur étant donc d'un type différent de celui que nous utilisons ici qui est un catalyseur à base d'oxyde de nickel. Et dans la demande EP-A-904839, relative à une passivation précédée d'une sulfuration, la sulfuration est effectuée par mise en contact du catalyseur avec un composé sulfuré en présence d'hydrogène et non en solution ou en suspension dans une solution aqueuse ou organique.

L'invention est réalisée plus particulièrement de la façon suivante :
On procède "hors site" (ex-situ) à l'imprégnation du catalyseur par au moins un composé soufré en présence d'au moins un solvant, c'est à dire que l'on opère en solution aqueuse ou en solution organique ou en suspension dans la solution aqueuse ou organique, entre 0 et 50° C, de préférence entre 10 et 40° C, plus particulièrement à température ambiante sauf quand l'étape (a) est conduite simultanément avec l'étape (b). Cette imprégnation est généralement réalisée par brassage de la masse catalytique avec au moins un solvant et au moins un agent soufré ou sulfuré. Ce brassage est effectué par tout moyen adéquat. A titre d'exemple on peut utiliser un imprégnateur rotatif où le solide est progressivement mis en contact avec la solution injectée par des buses.

A titre d'exemple, l'agent soufré ou sulfuré utilisé dans l'étape (a) peut être le diéthanol disulfure ou 2,2, dithiobis éthanol de formule HO-C2H4-S-S-C2H4-OH (appelé souvent D.E.O.D.S.) ou le DMDS (diméthyl disulfure). Ces disulfures peuvent être utilisés éventuellement en mélange avec du soufre élémentaire, notamment en poudre. Les polysulfures comme par exemple le ditertiododecylpolysulfure (TPS 32 d'ATOFINA) ou le ditertiononylpolysulfure (TPS 37 d'ATOFINA), de préférence en solution dans un solvant, peuvent être utilisés.

Lorsque l'on n'opère pas en solution ou en suspension aqueuse mais en solution ou suspension organique, on utilisera à titre de solvant organique de préférence un white spirit tel que défini dans US-4,530,917 de la demanderesse, ou éventuellement également tout autre solvant adéquat tel qu'un alcool ou polyalcool, glycol ou polyglycol, voire un solvant aliphatique ou aromatique.

A l'issue de l'étape (a), il peut être avantageux d'éliminer au moins la majeure partie du solvant utilisé : ainsi lorsque l'imprégnation décrite ci-dessus est terminée, on peut procéder alors à un traitement thermique de la masse catalytique entre 100 et 200°C, généralement entre 130 et 170°C, et plus particulièrement autour de 150°C, pendant 30 minutes à 3 heures, de préférence pendant environ 1 à 2 heures pour éliminer la majeure partie du solvant. On utilisera de préférence un four à lit mobile. A titre d'exemple on peut utiliser un four rotatif du genre four à louvres décrit dans le brevet US-4,551,437 de la demanderesse ou du genre four Louisville (décrit dans le brevet: FR-2649623 de la demanderesse).

Pour effectuer la réduction du catalyseur (étape (b)), le catalyseur est généralement réduit sous hydrogène, par exemple en four tournant, entre 250 et 600°C, généralement entre 350 et 500°C, et plus particulièrement autour de 450°C pendant 2 à 4heures.

Au cours de l'étape (c), le catalyseur est de préférence passivé pour permettre une manipulation sous air. Dans cette étape (c), on procède avantageusement à une passivation oxydante du catalyseur. Cette passivation oxydante s'effectue par oxydation partielle et superficielle des atomes de métal réduit du catalyseur et de préférence en lit en mouvement, par exemple en lit mobile ou dans un four rotatif. Cette oxydation s'effectue par une mise en contact du lit catalytique par une pression partielle d'oxygène dans un gaz inerte, par exemple l'azote. Cette pression partielle peut être initialement comprise entre 1 et 20% d'oxygène (ou 0.001 ou 0.02 Mpa) et préférentiellement de 5% d'O2. Cette pression partielle est progressivement augmentée jusqu'à atteindre la valeur nominale de l'oxygène dans l'air. Cette passivation s'effectue entre 0 et 150°C et préférentiellement entre 20 et 120°C. Le catalyseur passivé peut être mis à l'air libre.

Une alternative à la passivation oxydante est de plonger le catalyseur dans un liquide inerte lourd comme par exemple un hexadécane ou une huile paraffinique exempte d'impuretés. Cette technique permet aux sites actifs constitués de nickel métallique de ne pas réagir trop rapidement avec l'oxygène de l'air. Cependant, on verra dans les exemples que cette technique ne s'avère judicieuse à l'échelle industrielle pour manipuler des quantités importantes de catalyseur que si ce liquide inerte est suffisamment lourd.

Lorsque le catalyseur soumis aux trois étapes (a), (b) et (c) (ce catalyseur dont l'activité initiale a été sélectivée par empoisonnement des sites les plus actifs) est prêt à être livré à l'utilisateur (l'opérateur ou le raffineur), celui ci pourra alors "in situ », c'est à dire dans la zone de réaction où le catalyseur sera utilisé ultérieurement, procéder éventuellement, à la réactivation à l'hydrogène du catalyseur, par exemple pour un catalyseur à base d'oxyde de nickel, entre 100 et 250°C pendant 2 à 4 heures et de préférence entre 150 et 200°C pendant 2 à 3 heures.

Le procédé peut s'appliquer au traitement d'un catalyseur à base d'au moins un oxyde d'un métal actif (déposé sur une matrice amorphe ou cristalline) dont on cherche à modifier la sélectivité par empoisonnement d'une partie au moins de ses sites actifs par exemple par un agent contenant du soufre, procédé au cours duquel on transforme ex situ une partie substantielle dudit oxyde de métal en élément métallique et ou potentiellement on ré oxyde partiellement et superficiellement une partie du métal réduit pour rendre le catalyseur manipulable sous air. procédé à l'issue duquel on réalise in situ la réactivation du catalyseur en présence d'hydrogène à une température et pendant une durée de temps bien inférieure à la température et à la durée de temps qui eussent été nécessaires si le procédé multi-étapes selon l'invention n'avait pas été effectué.

### Exemple 1. (contre exemple) : Absence de soufre

Un catalyseur commercial de type Ni/Alumine contenant 24%poids de NiO est imprégné de white spirit tel que décrit précédemment jusqu'à remplir 70% du volume poreux (soit 0.7ml par gramme de catalyseur). Le catalyseur imprégné est laissé une heure dans un ballon rotatif à froid puis 2h à 150°C de façon à évaporer les hydrocarbures. Le catalyseur séché est ensuite traité en lit traversé à 450°C dans un four vertical par de l'hydrogène pur pendant 4h afin de réduire le nickel non sulfuré et d'éliminer les hydrocarbures. A la fin de la période d'activation, et toujours dans le ballon rotatif, le système est refroidi et purgé 4 heures sous azote et balayé, généralement à température ordinaire, par un mélange à 1% d'oxygène dans l'azote pendant 2 heures, puis à 5% d'oxygène pendant 2 heures puis à l'air pendant une heure. On obtient le catalyseur A.

### Exemple 2. (contre exemple) : Absence de la phase de réduction

Un catalyseur commercial de type Ni/Alumine contenant 24%poids de NiO est sulfuré, généralement à température ordinaire, avec des teneurs en soufre correspondant à 22% de la valeur théorique stoechiométrique du sulfure Ni₃S₂. Une stoechiométrie de 100% correspond à 6.81% poids de soufre exprimé sur valeur sèche corrigée de la perte au feu.

Ce catalyseur est imprégné d'une solution de ditertiononyl polysulfure dissous dans du white spirit. A 250g de catalyseur on ajoute 6g de TPS 37 en mélange avec 56g de white spirit tel que décrit précédemment. On obtient le catalyseur B. Il n'a subi qu'une étape d'imprégnation de composé sulfuré dite étape (a).

Le catalyseur imprégné B est laissé une heure dans un ballon rotatif à froid puis 2h à 150°C de façon à évaporer les hydrocarbures et fixer le soufre du polysulfure organique. A la fin de la période de séchage le système est refroidi et purgé 4 heures sous azote et balayé par un mélange à 1% d'oxygène dans l'azote pendant 2 heures, puis à 5% d'oxygène pendant 2 heures puis à l'air pendant une heure. On obtient le catalyseur C qui a subi les étapes (a) de sulfuration et (c) de passivation

### Exemple 3. : Selon l'invention : ici réalisation successive des étapes (a), (b) et (c)

Le catalyseur B ayant donc subi l'étape (a) est activé sous hydrogène dans un four rotatif tubulaire dans les conditions suivantes : Température 450°C - Temps 6h - Gaz 100% Hydrogène - Pression normale

A la fin de la période d'activation le système est refroidi et purgé 4 heures sous azote et balayé par un mélange à 1% d'oxygène dans l'azote pendant 2 heures, puis à 5% d'oxygène pendant 2 heures puis à l'air pendant une heure. On obtient le catalyseur D qui a subi successivement les étapes (a) de sulfuration, (b) de réduction et (c) de passivation.

### Exemple 4. : Selon l'invention : ici réalisation successive des étapes (a), (b) et (c')

Le catalyseur B ayant donc subi l'étape (a) est activé sous hydrogène dans un four rotatif tubulaire dans les conditions suivantes : Température 450°C - Temps 6h - Gaz 100% Hydrogène - Pression normale

A la fin de la période d'activation le système est refroidi et purgé 4 heures sous azote. A cette étape, le catalyseur ayant subi les étapes (a) de sulfuration et (b) de réduction est mise en contact avec un hydrocarbure lourd du type huile blanche (Marcol 82 d'Exxon Mobil) de façon à remplir la totalité du volume poreux dudit catalyseur. La quantité d'huile mise en oeuvre est de 58 g pour 100g de catalyseur. On obtient le catalyseur E qui a subi successivement les étapes (a) de sulfuration, (b) de réduction et (c') de passivation.

### Exemple 5.: pas conforme à l'invention : ici réalisation successive des étapes (b), c et (a)

Le même catalyseur commercial que l'exemple 2 est réduit sous hydrogène dans un four rotatif tubulaire dans les conditions suivantes : : Température 450°C - Temps 6h - Gaz 100% Hydrogène - Pression normale. Il est ensuite passivé en étant refroidi et purgé 4 heures sous azote et balayé par un mélange à 1% d'oxygène dans l'azote pendant 2 heures, puis à 5% d'oxygène pendant 2 heures puis à l'air pendant une heure. Le catalyseur réduit passivé est traité alors avec 6g de TPS37 et 56 g de white spirit pour 250g de catalyseur tel que décrit dans l'exemple 3. Le catalyseur imprégné est laissé une heure dans un ballon rotatif à froid puis 2h à 150°C de façon à évaporer les hydrocarbures et fixer le soufre du polysulfure organique. On obtient le catalyseur F ayant subi successivement les étapes (b) de réduction, (c) de passivation et (a) de sulfuration.

### Exemple 6. : selon l'invention : ici réalisation successive des étapes (b), (a) et (c)

Le même catalyseur commercial que l'exemple 2 est réduit sous hydrogène dans un four rotatif tubulaire dans les conditions suivantes : Température 450°C, temps 6h, gaz 100% Hydrogène, Pression normale.

A la fin de la phase de réduction (b) sous hydrogène, le catalyseur à base de nickel métallique est purgé et refroidi sous azote pendant 4 heures. Lors de cette étape de purge / refroidissement sous azote, du DMDS est nébulisé sur le catalyseur. Le débit massique de DMDS (0.6 g/h pour 100g de catalyseur) est déterminé de sorte que durant les 4 heures de purge / refroidissement du catalyseur, la quantité de soufre introduite est de 1.5g pour 100g de catalyseur réduit.

Après cette étape (a) de sulfuration, le catalyseur réduit et sulfuré est ensuite passivé par un mélange d'azote et d'air à 1% d'oxygène dans l'azote pendant 2 heures, puis à 5% d'oxygène pendant 2 heures puis à l'air pendant une heure.

On obtient le catalyseur G ayant subi successivement les étapes (b) de réduction, (a) de sulfuration et (c) de passivation

### Exemple 7. : selon l'invention : ici réalisation simultanée des étapes (a - b) puis (c)

Le même catalyseur commercial que l'exemple 2 est réduit sous d'hydrogène dans un four rotatif tubulaire. Simultanément à l'introduction de l'hydrogène, du TPS37 est pulvérisé dans le four par une pompe doseuse. Les conditions de traitement sont les suivantes : température 450°C, temps 6h, gaz 100% Hydrogène, pression normale. Le débit de TPS37 est de 40.5 g/h pour 1 kg/h de catalyseur.

A la fin de l'étape simultanée de réduction sulfuration, le catalyseur à base de nickel métallique est purgé et refroidi sous azote pendant 4 heures. Le catalyseur réduit et sulfuré est ensuite passivé par un mélange d'azote et d'air à 1% d'oxygène dans l'azote pendant 2 heures, puis à 5% d'oxygène pendant 2 heures puis à l'air pendant une heure.

On obtient le catalyseur H ayant subi simultanément les étapes (a) de sulfuration et (b) de réduction et enfin (c) de passivation

### Exemple 8.(contre exemple) : réalisation successive des étapes (a), (b) avec étape (c) non conforme

Le catalyseur B ayant donc subi l'étape (a) de sulfuration est activé sous hydrogène comme dans l'exemple 3. A la fin de la période d'activation, le produit est coulé dans l'heptane sous inerte sans étape de passivation. On obtient le catalyseur I non passivé conservé sous heptane. Le produit sera testé comme les autres catalyseurs. On verra qu'ici le liquide organique utilisé (l'heptane) n'est pas assez lourd, contrairement à l'exemple 4 où (c') est conduite en présence d'un hydrocarbure lourd.

### Exemple 9. : Les tests et caractérisation

Les catalyseurs sulfurés, réduits, passivés ou non sont caractérisés par :
- Une analyse de soufre (tel quel et après lixiviation au toluène), une mesure magnétique du taux de réduction Ni⁰ et un bilan poids sur le Nickel pour connaître les taux de réduction (nombre d'atomes de nickel métallique divisé par le nombre total d'atome de nickel), taux de sulfuration (nombre d'atomes de nickel lié à du soufre en supposant une stoechiométrie de type Ni₃S₂ divisé par le nombre total d'atome de nickel) et le taux de passivation (Nombre d'atome de nickel sous forme NiO divisé par le nombre total d'atome de nickel).
- Une évaluation du caractère auto échauffant des catalyseurs pour quantifier l'efficacité de la passivation : Température à laquelle le catalyseur doit être porté pour que sa température intrinsèque dépasse 200°C (T₁).
- Température maxi observée lorsque le catalyseur est remis à l'air après une dépassivation à 150°C sous hydrogène pendant 4h (T₂). Une élévation importante de la température est caractéristique d'une dépassivation suffisante.
- Test catalytique vis à vis de 2 réactions :
   a) L'hydrogénation des aromatiques (par exemple conversion du toluène). On choisit une réaction modèle qui est l'hydrogénation du toluène dans les conditions suivantes : 10% poids de toluène dans l'heptane - Température : 70°C - Pression : 30bar - Vitesse volumique horaire : 2h⁻¹ (2 litres de charge par litre de catalyseur et par heure).
   b) L'hydrogénation des dioléfines mesurée sur une essence de pyrolyse par la variation de la MAV (indice d'anhydride maléique caractéristique de la teneur en dioléfines) dans les conditions suivantes : Pression : 30bar - Température : 100°C - Vitesse volumique horaire : 8h⁻¹ - MAV de la charge : 87.

Les tests catalytiques sont réalisés sur des échantillons dépassivés in situ par un traitement sous hydrogène à 150°C pendant 4h.

Les résultats sont notés dans le tableau récapitulatif suivant.

| Exemple | 1 | 2 | 3 | 4 | 5 | 6 | 7 | 8 |
|---|---|---|---|---|---|---|---|---|
| Catalyseur | A | C | D | E | F | G | H | I |
| Nombre d'étapes^{a} | 2 | 2 | 3 | 3 | 3 | 3 | 3 | 2 |
| Etape et chronologie | (b) | (a) | (a) | (a) | (b) | (b) | (ab) | (a) |
| | (c) | (c) | (b) | (b) | (c) | (a) | (c) | (b) |
| | | | (c) | (c') | (a) | (c) | | |
| %pds de soufre sur brut (%) | 0 | 1.5 | 1.5 | 1.5 | 1.5 | 1.4 | 1.6 | 1.5 |
| %pds de soufre sur lixivié (%) | 0 | 1.5 | 1.5 | 1.5 | 1.5 | 1.4 | 1.4 | 1.5 |
| Taux de sulfuration (%) | 0 | 22 | 22 | 22 | 22 | 21 | 21 | 22 |
| Taux de réduction | 75 | 0 | 60 | 75 | 62 | 65 | 70 | 75 |
| Taux de passivation (%) | 20 | NA | 15 | 0 | 13 | 15 | 16 | 0 |
| T₁ (°C) | 180 | >200 | 190 | >200 | 25 | 185 | 190 | 25 |
| T₂ (°C) | 304 | 25 | 315 | 25 | 310 | 307 | 305 | 310 |
| Conversion du toluène (% pds) | 16 | 0 | 0 | 0 | 0 | 4 | 2 | 0 |
| MAV du produit obtenu | 21 | 83 | 40 | 42 | 41 | 41 | 41 | 41 |

| | | | | | | | | |
|---|---|---|---|---|---|---|---|---|
| ^{a} hors étape de réactivation in-situ avant utilisation finale. (a) Etape de sulfuration sélective, (b)Etape de réduction à chaud sous hydrogène, (c) Etape de passivation oxydante, (c') Etape de passivation à l'huile | | | | | | | | |

Le catalyseur A n'est pas sélectif et convertit trop le toluène car les atomes de nickel trop réactifs n'ont pas été passivés par le soufre. Le catalyseur C n'est pas actif en hydrogénation de dioléfines car la phase Ni métallique n'est pas présente. Les catalyseurs D, F, G et H sont actifs et sélectifs. D soumis aux étapes (a), (b) et (c), F soumis aux étapes (b) (c) et (a), G soumis aux étapes (b) (a) et (c), H soumis aux étapes (ab) et (c). Le catalyseur E est actif et sélectif. E soumis aux étapes (a), (b) et (c'). L'étape (c') est l'étape de passivation par une huile blanche. Le catalyseur I fournit des résultats satisfaisant en terme d'activité et sélectivité. Mais contrairement au catalyseur E, le catalyseur I est fortement auto-échauffant. S'il peut, à une petite échelle laboratoire, être manipulé à l'air avec précaution, par contre il y a des problèmes de sécurité à une échelle industrielle, avec un solvant léger comme l'heptane imprégné dans la porosité.

## Revendications

1. Procédé de traitement "ex situ" d'un catalyseur ayant besoin d'être réduit avant emploi, ce catalyseur contenant au moins un métal du groupe VIII de la classification périodique des éléments et exempt de métaux du groupe VI, déposé sur un support, consistant à effectuer trois étapes (a) (b) (c)
(a) Une mise en contact du catalyseur avec au moins un composé ou agent soufré (étape dite de sélectivation), le taux de sulfuration du métal est compris de 10 et 30 % , et on incorpore dans le catalyseur de 0.05 à 10% de soufre exprimé en poids de soufre par rapport à la masse du catalyseur,
(b) Un traitement de ce catalyseur par de l'hydrogène à une température supérieure à la température ambiante (étape dite de réduction).
(c) Une passivation de ce catalyseur réalisé par mise en contact avec un liquide organique inerte lourd ou par traitement oxydant réalisée après les étapes (a) et (b), le liquide organique inerte lourd est choisi dans le groupe constitué par une huile blanche, un gasoil, un hexadécane.

2. Procédé selon la revendication 1 dans lequel le catalyseur contient du nickel.

3. Procédé selon l'une des revendications 1 à 2 dans lequel le catalyseur, contient du nickel déposé sur un support, et dans lequel les trois étapes sont :
(a)Une mise en contact du catalyseur avec au moins un composé ou agent soufré (étape dite de sélectivation), étape au cours de laquelle on opère en présence d'au moins un solvant.
(b)Un traitement de ce catalyseur par de l'hydrogène à une température supérieure à la température ambiante (étape dite de réduction).
(c)Une passivation oxydante dudit catalyseur.

4. Procédé selon l'une des revendications 1 à 3 dans lequel le catalyseur est constitué d'oxyde de nickel déposé sur une alumine.

5. Procédé selon l'une des revendications 1 à 4 dans lequel les étapes (a) et (b) sont effectuées dans l'ordre (a) et (b).

6. Procédé selon l'une des revendications 1 à 4 dans lequel les étapes (a) et (b) sont effectuées dans l'ordre (b) et (a).

7. Procédé selon l'une des revendications 1 à 4 dans lequel les étapes (a) et (b) sont effectuées simultanément.

8. Procédé selon l'une des revendications 1 à 7 dans lequel au cours de l'étape (a) on opère par brassage de la masse catalytique et d'au moins un solvant et d'au moins un agent sulfuré à une température de 0-50°C.

9. Procédé selon l'une des revendications 1 à 8_dans lequel, à l'étape (a), dans le cas d'une solution ou suspension organique, on utilise un white spirit, un alcool, un polyalcool, un glycol ou un polyglycol .

10. Procédé selon l'une des revendications 1 à 9 dans lequel l'étape (b) dite de réduction est effectuée sous hydrogène entre 250 et 600°C.

11. Procédé selon l'une des revendications 1 à 10, dans lequel au cours de la dite étape (c), on procède à une passivation oxydante du catalyseur sélectivé et réduit, entre 0 et 150°C, de préférence dans un lit en mouvement, sous une pression partielle d'oxygène initialement comprise entre 0.001 et 0.02 MPa et étant progressivement augmentée jusqu'à atteindre la valeur nominale de l'oxygène dans l'air.

12. Procédé selon l'une des revendications 1 ou 11_dans lequel le dit agent ou composé soufré est choisi dans le groupe constitué par le diéthanoldisulfure (D.E.O.D.S.), le DMDS, les polysulfures et le soufre élémentaire.

13. Procédé selon l'une des revendications 1 à 12 dans lequel le taux de réduction du catalyseur avant passivation est d'au moins 40%.

14. Procédé selon l'une des revendications 1 à 13 dans lequel à l'issue de l'étape (a), on élimine au moins la majeure partie du solvant utilisé pour la mise en contact du catalyseur avec le composé ou l'agent soufré ou sulfuré.

15. Procédé selon l'une des revendications 1 à 14 dans lequel, à l'issue des étapes (a), (b) et (c), on procède « in situ », à la réactivation à l'hydrogène de ce catalyseur.

16. Utilisation du catalyseur obtenu dans le procédé selon l'une des revendications 1 à 15 dans un procédé d'hydrogénation des hydrocarbures aromatiques ou oléfiniques.

## Patentansprüche

1. Verfahren zur "ex-situ" Behandlung eines Katalysators, der vor der Verwendung reduziert werden muss, wobei dieser Katalysator mindestens ein Metall der Gruppe VIII des Periodensystems der Elemente und ausgenommen die Metalle der Gruppe VI aufweist, das auf einem Träger abgeschieden wird, daraus bestehend, die drei Schritte (a) (b) (c) durchzuführen:
(a) in Kontakt bringen des Katalysators mit mindestens einer schwefelhaltigen Verbindung oder einem schwefelhaltigen Mittel (der sogenannte Selektivierungsschritt), wobei der Grad der Sulfidierung des Metalls zwischen 10 und 30 % liegt, und in den Katalysator werden von 0,05 bis 10 Gew.-% Schwefel im Verhältnis zur Masse des Katalysators eingearbeitet,
(b) eine Behandlung dieses Katalysators mit Wasserstoff bei einer Temperatur über der Umgebungstemperatur (der sogenannte Reduktionsschritt),
(c) eine Passivierung dieses Katalysators, die durch in Berührung bringen mit einer schweren inerten organischen Flüssigkeit oder durch eine Oxidationsbehandlung ausgeführt wird, die nach den Schritten (a) (b) ausgeführt wird, wobei die schwere inerte organische Flüssigkeit aus der Gruppe ausgewählt wird, die aus einem Weißöl, einem Dieselöl, einem Hexadecan besteht.

2. Verfahren nach Anspruch 1, wobei der Katalysator Nickel enthält.

3. Verfahren nach einem der Ansprüche 1 bis 2, wobei der Katalysator Nickel enthält, das auf einem Träger abgeschieden wird, und wobei die drei Schritte die folgenden sind:
(a) in Kontakt bringen des Katalysators mit mindestens einer schwefelhaltigen Verbindung oder einem schwefelhaltigen Mittel (der sogenannte Selektivierungsschritt), wobei der Schritt in Anwesenheit von mindestens einem Lösungsmittel erfolgt,
(b) eine Behandlung dieses Katalysators mit Wasserstoff bei einer Temperatur über der Umgebungstemperatur (der sogenannte Reduktionsschritt),
(c) eine oxidierende Passivierung des Katalysators.

4. Verfahren nach einem der Ansprüche 1 bis 3, wobei der Katalysator aus einem Nickeloxid besteht, das auf einem Aluminiumoxid abgeschieden wird.

5. Verfahren nach einem der Ansprüche 1 bis 4, wobei die Schritte (a) und (b) in der Reihenfolge (a) und (b) durchgeführt werden.

6. Verfahren nach einem der Ansprüche 1 bis 4, wobei die Schritte (a) und (b) in der Reihenfolge (b) und (a) durchgeführt werden.

7. Verfahren nach einem der Ansprüche 1 bis 4, wobei die Schritte (a) und (b) gleichzeitig durchgeführt werden.

8. Verfahren nach einem der Ansprüche 1 bis 7, wobei während des Schrittes (a) ein Mischen der katalytischen Masse und mindestens eines Lösungsmittels und mindestens eines schwefelhaltigen Mittels bei einer Temperatur von 0 bis 50 °C ausgeführt wird.

9. Verfahren nach einem der Ansprüche 1 bis 8, wobei, falls es sich um eine organische Lösung oder eine Suspension handelt, in dem Schritt (a) Waschbenzin, Alkohol, Polyalkohol, Glykol oder Polyglykol verwendet wird.

10. Verfahren nach einem der Ansprüche 1 bis 9, wobei der sogenannte Reduzierungsschritt (b) unter Wasserstoff bei 250 bis 600 °C ausgeführt wird.

11. Verfahren nach einem der Ansprüche 1 bis 10, wobei während des sogenannten Schrittes (c) eine oxidierende Passivierung des ausgewählten und reduzierten Katalysators zwischen 0 und 150 °C vorzugsweise in einem Bewegungsbett unter Sauerstoffpartialdruck vorgenommen wird, der anfänglich zwischen 0,001 und 0,02 MPa liegt und schrittweise erhöht wird, bis er den Nennwert des Sauerstoffes in der Luft erreicht.

12. Verfahren nach einem der Ansprüche 1 bis 11, wobei das schwefelhaltige Mittel oder die schwefelhaltige Verbindung aus der Gruppe ausgewählt wird, die aus dem Diethanoldisulfid (D.E.O.D.S), dem DMDS, den Polysulfiden und dem elementaren Schwefel besteht.

13. Verfahren nach einem der Ansprüche 1 bis 12, wobei der Reduzierungsgrad des Katalysators vor der Passivierung mindestens 40 % beträgt.

14. Verfahren nach einem der Ansprüche 1 bis 13, wobei am Ende des Schrittes (a) mindestens der Hauptanteil des Lösungsmittels entfernt wird, das für das in Berührung bringen des Katalysators mit der schwefelhaltigen Verbindung oder dem schwefelhaltigen Mittel oder dem Sulfid verwendet wird.

15. Verfahren nach einem der Ansprüche 1 bis 14, wobei am Ende der Schritte (a), (b) und (c) in der Anlage (in-situ) die Reaktivierung dieses Katalysators mit Wasserstoff vorgenommen wird.

16. Verwendung des Katalysators, der in dem Verfahren nach einem der Ansprüche 1 bis 15 erhalten wird, in einem Verfahren zur Hydrogenierung der aromatischen oder olefinischen Kohlenwasserstoffe.

## Claims

1. A process for "ex situ" treatment of a catalyst which has to be reduced prior to use, said catalyst containing at least one metal from group VIII of the periodic table and which is free of group VI metals, deposited on a support, consisting of carrying out three steps a), b), c):
a) bringing the catalyst into contact with at least one sulphur-containing agent or compound (step termed selectivation), the degree of metal sulphurization is preferably in the range 10% to 30%, and 0.05% to 10% of sulphur, expressed as the weight of sulphur with respect to the mass of catalyst, is incorporated into the catalyst,
b) treating said catalyst with hydrogen at a temperature above ambient temperature (step termed reduction);
c) passivating said catalyst, carried out by contact with a heavy inert organic liquid or by oxidizing treatment carried out after steps a) and b), the heavy inert organic liquid is selected from the group constituted by a white oil, a gas oil and a hexadecane.

2. A process according to claim 1 or claim 2, in which the catalyst contains nickel.

3. A process according to one of claims 1 to 2, in which the catalyst contains nickel deposited on a support and in which the three steps are as follows:
a) bringing the catalyst into contact with at least one sulphur-containing agent or compound (step termed selectivation), the step being carried out in the presence of at least one solvent;
b) treating said catalyst with hydrogen at a temperature above ambient temperature (step termed reduction);
c) oxidizing passivation of said catalyst.

4. A process according to one of claims 1 to 3, in which the catalyst is constituted by nickel oxide deposited on an alumina.

5. A process according to one of claims 1 to 4, in which steps a) and b) are carried out in the order a) then b).

6. A process according to one of claims 1 to 4, in which steps a) and b) are carried out in the order b) then a).

7. A process according to one of claims 1 to 4, in which steps a) and b) are carried out simultaneously.

8. A process according to one of claims 1 to 7, in which during step a), the catalytic mass is stirred with at least one solvent and at least one sulphurized agent at a temperature of 0-50°C.

9. A process according to one of claims 1 to 8, in which, in step a), in the case of an organic solution or suspension, a white spirit, an alcohol, a polyalcohol, a glycol or a polyglycol is used.

10. A process according to one of claims 1 to 9, in which reduction step b) is carried out in hydrogen between 250°C and 600°C.

11. A process according to one of claims 1 to 10, in which during said step c), oxidizing passivation of the selectivated and reduced catalyst is carried out between 0°C and 150°C, preferably in a moving bed, at a partial pressure of oxygen which is initially in the range 0.001 to 0.02 MPa and being progressively increased to the nominal value of oxygen in air.

12. A process according to one of claims 1 to 11, in which said sulphur-containing agent or compound is selected from the group constituted by diethanoldisulphide (DEODS), DMDS, polysulphides and elemental sulphur.

13. A process according to one of claims 1 to 12, in which the degree of reduction of the catalyst prior to passivation is at least 40%.

14. A process according to one of claims 1 to 13, in which at the end of step a), at least the major portion of the solvent used for contacting the catalyst with the sulphur-containing or sulphurized compound or agent is eliminated.

15. A process according to one of claims 1 to 14, in which, at the end of steps a), b) and c), said catalyst is reactivated with hydrogen "in situ".

16. Use of the catalyst obtained in the process according to one of claims 1 to 15 in a process for hydrogenation of aromatic or olefinic hydrocarbons.
